# EUROPEAN PATENT SPECIFICATION

(11) **EP 1 680 994 B1**
(45) Date of publication and mention of the grant of the patent: **02.07.2008**
(21) Application number: 05112304.0
(22) Date of filing: 16.12.2005
(51) Int. Cl.: A47J 37/06

(54) **Cooking apparatus**
Kochgerät
Appareil de cuisson

(30) Priority: 13.01.2005 KR 2005003310
(43) Date of publication of application: 19.07.2006
(73) Proprietor: Samsung Electronics Co., Ltd., Suwon-si, Gyeonggi-Do (KR)
(72) Inventor: Jang, Seong-deog, Gyeonggi-do (KR); Kang, Han-seong, Gyeonggi-do (KR); Kwong, Yong-hyun, Gyeonggi-do (KR); Kim, Chul, Gyeonggi-do (KR); Sung, Han-jun, Gyeonggi-do (KR); Han, Dae-sung, Gyeonggi-do (KR); Lee, Tae-euk, Gyeonggi-do (KR)
(74) Representative: Grey, Ian Michael

(56) References cited:
- EP-A- 1 444 939
- FR-A- 2 711 499
- FR-A- 2 827 146

## Description

The present invention relates to a cooking apparatus having a grill part to cook food thereon, and an electric heater to cook the food, comprising a grill housing comprising a main casing having an opening part coupled with the grill part, the electric heater provided thereon, and a top casing coupled with an upper side circumferential area of the main casing with a centre thereof to the opening part, the top casing comprising a plurality of top casing units separately provided from each other.

The term "grilling" refers to a method of broiling meats, fish or other food on a gridiron or directly roasting skewered meats or fish over a heat source and can be done with a device using electricity or gas, etc.

Many modern grilling devices use electrically powered heaters as heating source and generally comprise a main body including a grill part for directly contacting and cooking food. The heat from the electric heaters is reflected to the grill part by a grill reflecting member. Such a conventional grill device is disclosed in Korean Patent First Publication No. 2004-39155 which includes a main body having a top plate on its upper surface and a plurality of heating members provided beneath the top plate. A grill member is disposed in an upper part of the main body on which food to be cooked is placed and a heat reflection member is disposed in a lower part of the main body beneath the grill member for transmitting radiant heat from the heating members to the grill member.

Another known prior art cooking device is disclosed in FR 2711499.

However, conventional cooking devices suffer the drawback in that they are not configured to prevent the top plate of the main body from being heated by the heating members, either directly or by reflection of the heat by the heat reflection member. Therefore, in conventional cooking devices, the top plate part of the main body which a user can easily touch or come into contact with, can get very hot.

Therefore, it is an object of the present invention to provide a cooking apparatus that substantially alleviates or overcomes the problems mentioned above.

Accordingly, the present invention is characterised in that the main casing further comprises an inner casing providing electric heaters in an inner side thereof and an outer casing disposed such that a predetermined space exist between the outer casing and the inner casing, wherein the top casing is coupled with an upper side of the inner casing and the outer casing, to cover the predetermined space between the inner casing and the outer casing.

Preferably, the top casing comprises a first top casing unit coupled with an upper area of the outer casing and a second top casing unit being capable of separating from the first top casing unit, coupled with an upper area of the inner casing.

Conveniently, the top casing includes an insulation space forming an air layer between the first top casing unit and the second top casing unit, and preferably the insulation space is formed by a predetermined distance between the first top casing unit and the second top casing unit.

In a preferred embodiment, the second top casing unit comprises a plurality of contact parts spaced along a circumferential direction of the opening part of the main casing, wherein the first top casing unit contacts with the second top casing unit by the plurality of contact parts.

Preferably, the first top casing includes a horizontally protruding lip extending around an inner edge thereof to support the second top casing thereon.

Preferably, the plurality of contact parts are formed integrally with the second top casing and are downwardly extending therefrom.

In an alternate preferred embodiment, the first top casing unit comprises a plurality of contact parts spaced along a circumferential direction of the opening part of the main casing, wherein the second top casing unit contacts with the first top casing unit by the plurality of contact parts.

Preferably, the plurality of contact parts are formed integrally with the first top casing and are upwardly extending therefrom.

In a preferred embodiment, the electric heater comprises a plurality of electric heaters installed oppositely to each other on sidewalls of the inner casing to cook the food seated on the grill part.

Preferably, the inner casing comprises a grill reflecting member to reflect the heat generated by the electric heaters to cook the food.

Preferably, the grill reflecting member comprises reflection faces interconnected with each other to reflect heat generated by the electric heater in a bent manner.

A preferred embodiment further comprises an oil collector positioned at a lower part of the inner casing to collect oil from the food being cooked and oil guiding holes at respective ends of the reflection faces, to guide the oil into the oil collector.

A preferred embodiment of the present invention will now be described, by way of example only, with reference to the accompanying drawings, in which:
Figure 1 is an exploded perspective view illustrating a cooking apparatus according to an embodiment of the present invention;
Figure 2 is an exploded perspective view illustrating a grill part and a grill housing of the cooking apparatus of Figure 1;
Figure 3 is a perspective view of a top casing unit illustrated in Figure 2; and
Figure 4 is a sectional view of the cooking apparatus taken along line IV-IV of Figure 2 illustrating the grill part and the grill housing assembled together.

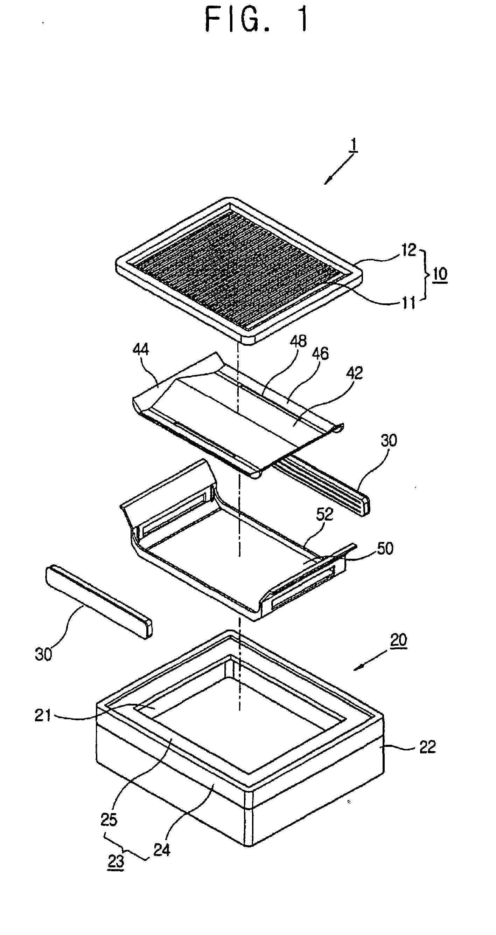

Referring now to Figure 1, a cooking apparatus 1 is shown according to the present invention comprising a grill part 10 on which food is cooked, a grill housing 20 coupled with an underside of the grill part 10, the grill housing 20 containing various components described in detail hereafter.

The grill part 10 is coupled with an upper part of the grill housing 20 and comprises a plurality of grill bars 11 disposed at predetermined intervals and a support frame 12 supporting the plurality of grill bars 11 around its edge.

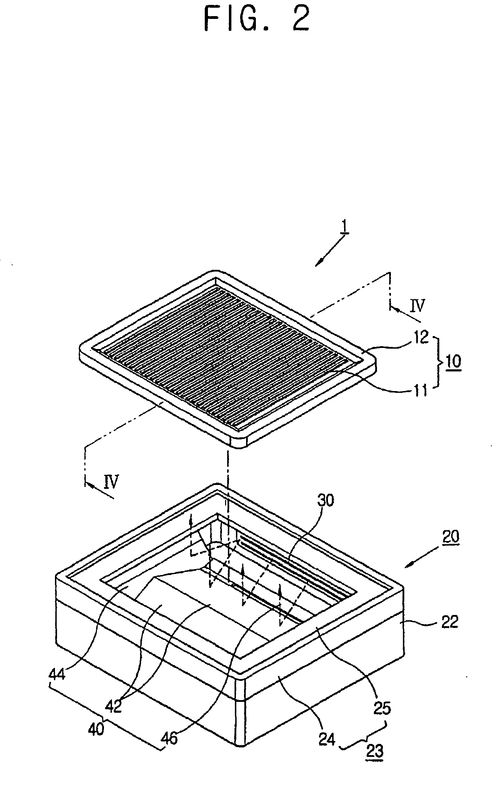

The grill part 10 is mounted over an opening in the top of the grill housing 20 inside of which a heating space is formed. A pair of electric heaters 30 are provided inside the grill housing 20 together with a grill reflecting member 40 (shown in Figure 2) for reflecting heat from the electric heaters 30 towards the grill part 10. An oil collector 50 is provided beneath the grill reflecting member 40 to collect oil or other residues from food during cooking and includes upwardly extending side wall parts 52 coupled to curved side plate parts 49.

The grill housing 20 comprises a main casing 31 having a inner casing 21 which defines a heating space and an outer casing 22 disposed such that a space exists between the inner casing 21 and the outer casing 22. A top casing 23 covers an upper portion of the inner casing 21 and the outer casing 22. The top casing 23 may be made of a metallic material but equally could alternatively be made from any other suitable material.

The two electric heaters 30 are installed opposite to each other on side walls inside the grill housing 20 beneath the grill part 10. The heat generated by the electric heaters 30 is transmitted to the grill part 10 directly and by reflection off the grill reflecting member 40.

The grill reflecting member 40 is approximately W-shaped in cross section and may be made of a metallic material having a good thermal conductivity and reflectivity so as to reflect the heat generated from the electric heaters 30 and transmit it to the grill part 10. However, the grill reflecting member 40 can alternatively be made of any other suitable material.

The grill reflecting member 40 comprises a pair of first reflection faces 42 interconnected at a centre of the grill reflecting member 40, auxiliary reflection faces 46, one formed adjacent to each first reflection face 42 along an outside edge thereof, and a second reflection face 44 extending along ends of the first reflection faces 42 and the auxiliary reflection faces 46.

The first reflection faces 42 are disposed in front of the electric heaters 30 and are angled so as to reflect the heat generated from the electric heaters 30 to the grill part 10.

The auxiliary reflection faces 46 are positioned adjacent to the electric heaters 30 and so they become hot while the cooking apparatus 1 is in operation. Curved side plate parts 49 are formed on ends of the auxiliary reflection faces 46 which are coupled with the upstanding side wall parts 52 of the oil collector 50.

An oil guiding hole 48 is formed between each auxiliary reflection face 46 and its respective adjacent first reflection face 42 through which oil from the food being cooked can pass to be collected in the oil collector 50 disposed beneath the grill reflection member 40.

The second reflection face 44 is disposed laterally to the direction in which the electric heaters 30 emit heat. The second reflection face 44 is smoothly curved so as to allow the heat generated from the electric heaters 30 to be reflected to the grill part 10.

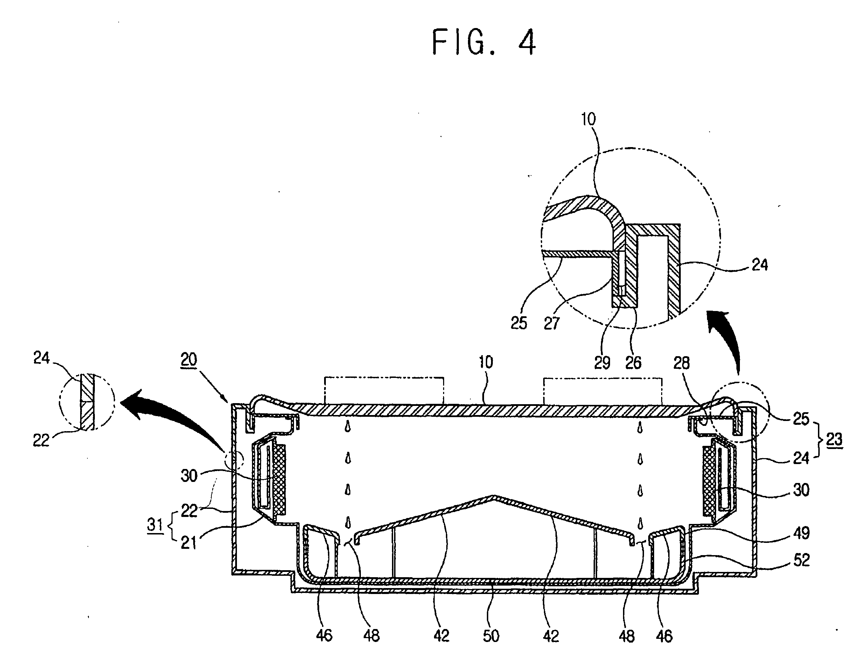

As shown in Figures 2 and 4, the top casing 23 comprises a first top casing unit 24 and a second top casing unit 25 which can be separated from each other and are disposed in a spaced relationship to one another to minimise heat conduction between the casing units 24,25 of heat generated from the electric heaters 30 and transmitted through the inner casing 21.

A first end part of the first top casing unit 24 is coupled with an upper portion of the outer casing 22 and a second end part of the first top casing unit 24 is provided with a first contact support 26 in the form of a horizontally protruding lip which contacts and supports the second casing unit 25.

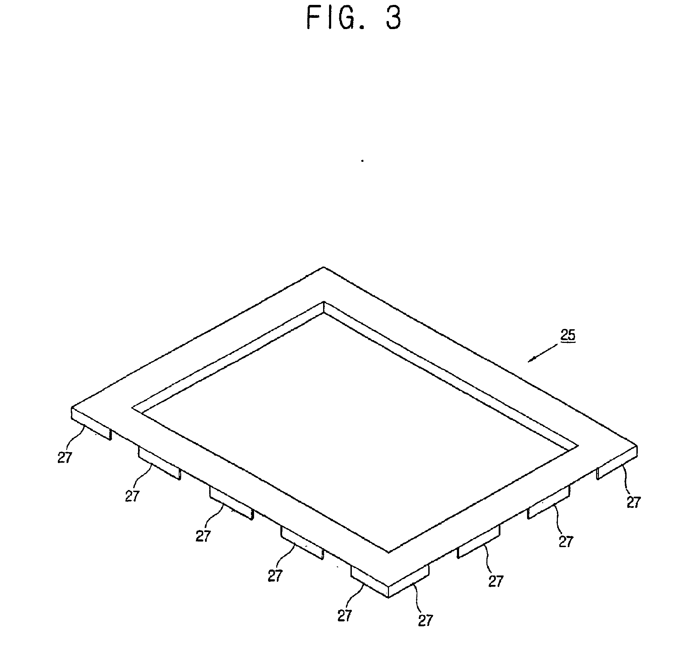

A first end part of the second top casing unit 25 is contacted and supported by a second contact supporter 28 in the form of a horizontally protruding lip formed around an upper edge of the inner casing 21. As shown in Figure 3, a second end of the second top casing unit 25 is provided with a plurality of point contact parts 27 in the form of downwardly extending plates spaced around the edge of the second top casing unit 25 which sit on the first contact support 26 of the first top casing unit 24.

An insulation space 29 is provided between the first top casing unit 24 and the second top casing unit 25.

The grill reflection member 40, the oil collector 50 and the electric heaters 30 are accommodated inside the grill housing 20. The grill part 10 is disposed on an upper portion of the grill housing 20 and, in use, as food is cooked on the grill part 10, the oil from the food being cooked falls down onto the grill reflection member 40. The oil is then guided to the oil collector 50 beneath the grill reflection member 40 through the oil guiding hole 48.

During the cooking process, heat generated by the electric heaters 30 within the inner casing 21 of the grill housing 20 can be conducted through the inner casing 21 to the top casing 23. However, because the top casing 23 comprises first and second top casing units 24,25 which are spaced from each other, heat transmitted by conduction from the inner casing 21 to the second top casing 25 cannot easily transfer to the first top casing unit 24. This prevents the top casing 23 from becoming hot. Furthermore, the insulation space 29 in the form of an air layer between the first top casing unit 24 and the second top casing unit 25 also prevents the heat transmitted from the inner casing 21 to the second top casing 25 from being transmitted to the first top casing unit 24, further preventing the top casing 23 from becoming hot.

The contact area between the second top casing unit 25 and the first top casing unit 24 is kept to a minimum by use of the point contact parts 27 which sit on the first contact support 26. This minimises the amount of heat that can be transmitted by conduction from the second top casing unit 25 to the first top casing unit 24 thereby yet further preventing top casing 23 from becoming hot.

In the above described embodiments of the present invention, the first and second top casing units 24,25 that form the top casing 23 are capable of being separated from each other. However, the present invention is not limited to such an embodiment. In addition, the top casing 23 may comprise a plurality of the top casing units.

Furthermore, although the point contact parts 27 are described as being provided on the second top casing unit 25 they may equally be provided on the first top casing unit 25.

Although a few embodiments of the present invention have been shown and described, it will be appreciated by those skilled in the art that changes may be made in these embodiments without departing from the principles of the invention, the scope of which is defined in the appended claims hereafter.

## Claims

1. A cooking apparatus (1) having a grill part (10) to cook food thereon, and an electric heater (30) to cook the food, comprising a grill housing (20) comprising a main casing (31) having an opening part coupled with the grill part (10), the electric heater (30) provided thereon, and a top casing (23) coupled with an upper side circumferential area of the main casing (31) with a centre thereof to the opening part, the top casing (23) comprises a plurality of top casing units (24,25) separately provided from each other, **characterised in that** the main casing (31) further comprises an inner casing (21) providing electric heaters (30) in an inner side thereof and an outer casing (22) disposed such that a predetermined space exist between the outer casing (22) and the inner casing (21), wherein the top casing (23) is coupled with an upper side of the inner casing (21) and the outer casing (22), to cover the predetermined space between the inner casing (21) and the outer casing (22).

2. The cooking apparatus (1) according to claim 1, wherein the top casing (23) comprises a first top casing unit (24) coupled with an upper area of the outer casing (22) and a second top casing unit (25) being capable of separating from the first top casing unit (24), coupled with an upper area of the inner casing (21).

3. The cooking apparatus (1) according to claim 2, wherein the top casing (23) includes an insulation space (29) forming an air layer between the first top casing unit (24) and the second top casing unit (25).

4. The cooking apparatus according to claim 3, wherein the insulation space (29) is formed by a predetermined distance between the first top casing unit (24) and the second top casing unit (25).

5. The cooking apparatus (1) according to any of claims 2 to 4, wherein the second top casing unit (25) comprises a plurality of contact parts (27) spaced along a circumferential direction of the opening part of the main casing (31), wherein the first top casing unit (24) contacts with the second top casing unit (25) by the plurality of contact parts (27).

6. The cooking apparatus (1) according to claim 5, wherein the plurality of contact parts (27) are formed integrally with the second top casing (25) and are downwardly extending therefrom.

7. The cooking apparatus (1) according to any of claims 2 to 4, wherein the first top casing unit (24) comprises a plurality of contact parts (27) spaced along a circumferential direction of the opening part of the main casing (31), wherein the second top casing unit (25) contacts with the first top casing unit (24) by the plurality of contact parts (27).

8. The cooking apparatus (1) according to claim 7, wherein the plurality of contact parts (27) are formed integrally with the first top casing (24) and are upwardly extending therefrom.

9. The cooking apparatus (1) according to any preceding claim, wherein the electric heater (30) comprises a plurality of electric heaters (30) installed oppositely to each other on sidewalls of the inner casing (21) to cook the food seated on the grill part (10).

10. The cooking apparatus (1) according to any preceding claim, wherein the inner casing (21) comprises a grill reflecting member (40) to reflect the heat generated by the electric heaters (30) to cook the food.

11. The cooking apparatus (1) according to claim 10, wherein the grill reflecting member (40) comprises reflection faces (42,44,46) interconnected with each other to reflect heat generated by the electric heaters (30) in a bent manner.

12. The cooking apparatus (1) according to claim 11 further comprising an oil collector (50) positioned at a lower part of the inner casing (21) to collect oil from the food being cooked and oil guiding holes (48) at respective ends of the reflection faces (42,44,46), to guide the oil into the oil collector (50).

## Patentansprüche

1. Kochvorrichtung (1) mit einem Grillteil (10) zum Zubereiten von Lebensmitteln darauf und einer elektrischen Heizeinrichtung (30) zum Zubereiten der Lebensmittel, die ein Grillgehäuse (20) umfasst, das ein Hauptgehäuse (31) mit einem Öffnungsteil umfasst, der mit dem Grillteil (10) verbunden ist, wobei die elektrische Heizeinrichtung (30) darauf vorhanden ist, und ein oberes Gehäuse (23), das mit einem Umfangsbereich der oberen Seite des Hauptgehäuses (31) mit einer Mitte desselben zu dem Öffnungsteil verbunden ist, wobei das obere Gehäuse (23) eine Vielzahl von Einheiten (24, 25) des oberen Gehäuses umfasst, die separat voneinander vorhanden sind, **dadurch gekennzeichnet, dass** das Hauptgehäuse (31) des Weiteren ein inneres Gehäuse (21), das elektrische Heizeinrichtungen (30) an einer Innenseite aufweist, sowie ein äußeres Gehäuse (22) umfasst, das so angeordnet ist, dass ein vorgegebener Zwischenraum zwischen dem äußeren Gehäuse (22) und dem inneren Gehäuse (21) vorhanden ist, wobei das obere Gehäuse (23) mit einer oberen Seite des inneren Gehäuses (21) und des äußeren Gehäuses (22) verbunden ist, um den vorgegebenen Zwischenraum zwischen dem inneren Gehäuse (21) und dem äußeren Gehäuse (22) abzudecken.

2. Kochvorrichtung (1) nach Anspruch 1, wobei das obere Gehäuse (23) eine erste Einheit (24) des oberen Gehäuses, die mit einem oberen Bereich des äußeren Gehäuses (22) verbunden ist, und eine zweite Einheit (25) des oberen Gehäuses umfasst, die von der ersten Einheit (24) des oberen Gehäuses getrennt werden kann und mit einem oberen Bereich des inneren Gehäuses (21) verbunden ist.

3. Kochvorrichtung (1) nach Anspruch 2, wobei das obere Gehäuse (23) einen Isolierraum (29) enthält, der eine Luftschicht zwischen der ersten Einheit (24) des oberen Gehäuses und der zweiten Einheit (25) des oberen Gehäuses bildet.

4. Kochvorrichtung nach Anspruch 3, wobei der Isolierraum (29) durch einen vorgegebenen Abstand zwischen der ersten Einheit (24) des oberen Gehäuses und der zweiten Einheit (25) des oberen Gehäuses gebildet wird.

5. Kochvorrichtung (1) nach einem der Ansprüche 2 bis 4, wobei die zweite Einheit (25) des oberen Gehäuses eine Vielzahl von Kontaktteilen (27) umfasst, die in einer Umfangsrichtung des Öffnungsteils des Hauptgehäuses (31) beabstandet sind, und fangsrichtung des Öffnungsteils des Hauptgehäuses (31) beabstandet sind, und die erste Einheit (24) des oberen Gehäuses durch die Vielzahl von Kontaktteilen (27) mit der zweiten Einheit (25) des oberen Gehäuses in Kontakt ist.

6. Kochvorrichtung (1) nach Anspruch 5, wobei die Vielzahl von Kontaktteilen (27) integral mit dem zweiten oberen Gehäuse (25) ausgebildet sind und sich davon nach unten erstrecken.

7. Kochvorrichtung (1) nach einem der Ansprüche 2 bis 4, wobei die erste Einheit (24) des oberen Gehäuses eine Vielzahl von Kontaktteilen (27) umfasst, die in einer Umfangsrichtung des Öffnungsteils des Hauptgehäuses (31) beabstandet sind, und die zweite Einheit (25) des oberen Gehäuses durch die Vielzahl von Kontaktteilen (27) mit der ersten Einheit (24) des oberen Gehäuses in Kontakt ist.

8. Kochvorrichtung (1) nach Anspruch 7, wobei die Vielzahl von Kontaktteilen (27) integral mit dem ersten oberen Gehäuse (24) ausgebildet sind und sich davon nach unten erstrecken.

9. Kochvorrichtung (1) nach einem der vorangehenden Ansprüche, wobei die elektrische Heizeinrichtung (30) eine Vielzahl elektrischer Heizeinrichtungen (30) umfasst, die einander gegenüberliegend an Seitenwänden des inneren Gehäuses (21) installiert sind, um die auf dem Grillteil (10) liegenden Lebensmittel zuzubereiten.

10. Kochvorrichtung (1) nach einem der vorangehenden Ansprüche, wobei das innere Gehäuse (21) ein Grill-Reflexionselement (40) umfasst, das die durch die elektrischen Heizeinrichtungen (30) erzeugte Wärme reflektiert, um die Lebensmittel zuzubereiten.

11. Kochvorrichtung (1) nach Anspruch 10, wobei das Grill-Reflexionselement (40) Reflexionsflächen (42, 44, 46) umfasst, die miteinander verbunden sind, um durch die elektrischen Heizeinrichtungen (30) erzeugte Wärme gekrümmt zu reflektieren.

12. Kochvorrichtung (1) nach Anspruch 11, die des Weiteren einen Ölsammler (50), der an einem unteren Teil des inneren Gehäuses (21) angeordnet ist, um Öl von den zubereiteten Lebensmitteln aufzufangen, sowie Ölleitlöcher (48) an jeweiligen Enden der Reflexionsflächen (42, 44, 46) umfasst, die das Öl in den Ölsammler (50) leiten.

## Revendications

1. Appareil de cuisson (1) comportant une partie grill (10) pour y cuire de la nourriture et un chauffage électrique (30) permettant de cuire la nourriture, constitué d'un corps de grill (20) composé d'un boîtier principal (31) comportant une partie d'ouverture couplée à la partie grill (10), le chauffage électrique (30) y étant installé, et un boîtier supérieur (23) couplé à une surface circonférentielle latérale supérieure du boîtier principal (31), son centre débouchant sur la partie d'ouverture, le boîtier supérieur (23) comporte une pluralité d'unités de boîtier supérieur (24, 25) séparées les unes des autres, **caractérisé en ce que** le boîtier principal (31) contient en outre un boîtier interne (21) disposant de chauffages électriques (30) dans l'une de ses parois internes et un boîtier externe (22) disposé de manière qu'un espace prédéterminé existe entre le boîtier externe (22) et le boîtier interne (21), où le boîtier supérieur (23) est couplé à un bord supérieur du boîtier interne (21) et au boîtier externe (22), pour couvrir l'espace prédéterminé entre le boîtier interne (21) et le boîtier externe (22).

2. Appareil de cuisson (1) selon la revendication 1, dans lequel le boîtier supérieur (23) contient une première unité de boîtier supérieur (24) couplée à une surface supérieure du boîtier externe (22) et une seconde unité de boîtier supérieur (25) capable d'être séparée de la première unité de boîtier supérieur (24) couplée à une surface supérieure du boîtier interne (21).

3. Appareil de cuisson (1) selon la revendication 2, dans lequel le boîtier supérieur (23) contient un espace isolant (29) formant une couche d'air entre la première unité de boîtier supérieur (24) et la seconde unité de boîtier supérieur (25).

4. Appareil de cuisson selon la revendication 3, dans lequel l'espace isolant (29) est formé par une distance prédéterminée entre la première unité de boîtier supérieur (24) et la seconde unité de boîtier supérieur (25).

5. Appareil de cuisson (1) selon l'une quelconque des revendications 2 à 4, dans lequel la seconde unité de boîtier supérieur (25) comprend d'une pluralité de parties de contact (27) espacées sur une direction circonférentielle de la partie d'ouverture du boîtier principal (31), dans lequel la première unité de boîtier supérieur (24) vient au contact de la seconde unité de boîtier supérieur (25) au moyen de la pluralité des parties de contact (27).

6. Appareil de cuisson (1) selon la revendication 5, dans lequel la pluralité des parties de contact (27) sont formées intégralement avec le second boîtier supérieur (25) et se prolongent vers le bas à partir de celui-ci.

7. Appareil de cuisson (1) selon l'une quelconque des revendications 2 à 4, dans lequel la première unité de boîtier supérieur (24) comprend une pluralité de parties de contact (27) espacées sur une direction circonférentielle de la partie d'ouverture du boîtier principal (31), dans lequel la seconde unité de boîtier supérieur (25) vient au contact de la première unité de boîtier supérieur (24) au moyen de la pluralité des parties de contact (27).

8. Appareil de cuisson (1) selon la revendication 7, dans lequel la pluralité des parties de contact (27) sont formées intégralement avec le premier boîtier supérieur (24) et se prolongent vers le haut à partir de celui-ci.

9. Appareil de cuisson (1) selon l'une quelconque des revendications précédentes, dans lequel le chauffage électrique (30) comprend une pluralité de chauffages électriques (30) installés à l'opposé les uns des autres sur les parois latérales du boîtier interne (21) pour cuire la nourriture déposée sur la partie grill (10).

10. Appareil de cuisson (1) selon l'une quelconque des revendications précédentes, dans lequel le boîtier interne (21) comprend un élément réflecteur pour le grill (40) permettant de réfléchir la chaleur générée par les chauffages électriques (30) afin de cuire la nourriture.

11. Appareil de cuisson (1) selon la revendication 10, dans lequel l'élément réflecteur de grill (40) comporte des faces réfléchissantes (42, 44, 46) interconnectées les unes avec les autres pour réfléchir la chaleur générée par les chauffages électriques (30) de manière courbe.

12. Appareil de cuisson (1) selon la revendication 11 contenant en outre un récupérateur d'huile (50) positionné sur une partie inférieure du boîtier interne (21) pour récupérer l'huile provenant de la nourriture cuisinée et des trous de guidage de l'huile (48) situés aux extrémités respectives des faces réfléchissantes (42, 44, 46) pour guider l'huile dans le récupérateur d'huile (50).
